# EUROPEAN PATENT APPLICATION

(11) **EP 3 308 990 A1**
(43) Date of publication of application: **18.04.2018**
(21) Application number: 16465551.6
(22) Date of filing: 14.10.2016
(51) Int. Cl.: B60K 6/08, B60K 6/30, B60K 6/26, B60K 6/40, B60K 6/10, B60K 6/387

(54) **ENERGY STORING AND DELIVERING DEVICE FOR A CAR**

(71) Applicant: Continental Automotive GmbH, 30165 Hannover (DE)
(72) Inventor: Murgoci, Dragos, 700731 Iasi (RO)

(57) **Abstract**

The invention relates to an energy storing and delivering device (9) for a car. The device (9) comprises an elastic energy storing and delivering system (12), a magnetic-electric energy storing and delivering system (13), an inertial energy storing and delivering system (14) and coupling means (15). The coupling means (15) are adapted for coupling a driving shaft (8) of the car with at least one of the elastic system (12), the magnetic-electric system (13) and the inertial system (14) depending on a speed of the car in such a way that kinetic energy of the car can be stored by the respective coupled system (12, 13 and/or 14) and that kinetic energy of the respective coupled system (12, 13 and/or 14) can be delivered to the driving shaft (8) of the car.

## Description

The invention relates to an energy storing and delivering device for a car. Furthermore the invention relates to a car with such an energy storing and delivering device.

With every brake of a car energy is lost. If, for example, a car weighing 1.500 kg is driving at a speed of 50 km/h is stopping (i.e. decelerating to 0 km/h), about 144 kJ kinetic energy is lost during the respective braking. Thus, there is a need for technologies, to regenerate (to store and to deliver again) kinetic energy of a car, in particular during a braking action of the car. Architectures are known, which solve the problem of storing and delivering kinetic energy such as the so-called "kinetic energy regeneration system". However, such a system is expensive and made for high-speed cars such as Formula One cars only.

It is an object of the present invention to provide an inexpensive fuel saving energy storing and delivering device which is compact and very applicable in diverse type of cars.

The problem is solved by the subject matter according to the independent claims. The dependent claims, the following description and the drawings show preferred embodiments of the invention.

According to a first aspect of the invention, an energy storing and delivering device for a car is provided. The device comprises an elastic energy storing and delivering system, a magnetic-electric energy storing and delivering system, an inertial energy storing and delivering system and coupling means.

The coupling means are adapted for coupling a driving shaft, e.g. a bellow shaft, of the car with at least one of the elastic energy storing and delivering system, the magnetic-electric energy storing and delivering system and the inertial energy storing and delivering system depending on a speed of the car in such a way that kinetic energy of the car can be stored by the respective coupled system (energy storing function). The magnetic-electric energy storing and delivering system can be used for propelling the car, by using energy from the battery, wherein the battery can be charged from an external car power source.

Furthermore, the coupling means are adapted for coupling the driving shaft of the car with at least one of the elastic energy storing and delivering system, the magnetic-electric energy storing system and delivering system and the inertial energy storing and delivering system depending on a speed of the car in such a way that kinetic energy of the respective coupled system can be delivered to the driving shaft of the car (energy delivering function).

The energy storing function and the energy delivering function depend on the speed of the car or on a kinetic energy level of the car, respectively. This enables a very efficient regeneration of kinetic energy of the car, because each of the elastic, magnetic-electric and inertial system can be used to store and deliver energy at its optimal operation point.

For example, the driving shaft of the car can be coupled in the aforementioned manner with the inertial energy storing and delivering system, e.g. a flywheel, if the car is driving at a high-speed (e.g. at a speed above 130 km/h).

Also, the driving shaft of the car can be coupled in the aforementioned manner with the magnetic-electric energy storing and delivering system, e.g. a motor/generator unit, if the car is driving at a medium speed (e.g. at a speed below 130 km/h).

Furthermore, the driving shaft of the car can be coupled in the aforementioned manner with the elastic energy storing and delivering system, e.g. a spring mechanism, if the car is driving at a low speed for at least supporting a stopping (i.e. decelerating to 0 km/h) or starting (i.e. accelerating after stopping) of the car, respectively (e.g. stopping from below 50 km/h or starting and accelerating from 0 km/h).

The device enables to save fuel by storing kinetic energy of the car, wherein said kinetic energy normally at least partly would be lost, especially during braking of the car. This has a positive impact on the environment, especially in city spaces. The device can be used in diverse type of cars.

According to a first embodiment, the elastic energy storing and delivering system comprises a ball screw (revertible), an axial cam, at least one piston and at least one rubber spring. In a preferred embodiment the elastic energy storing and delivering system can comprise three pistons and three rubber springs, wherein each of the three rubber springs is associated with one of the three pistons, respectively. In detail, a first rubber spring can be associated with a first piston, a second rubber spring can be associated with a second piston and a third rubber spring can be associated with a third piston. The functions, technical effects and advantages described in connection with the "at least one piston" and "the at least one rubber spring" apply mutatis mutandis also to the three pairs of rubber springs and pistons.

In accordance with the first embodiment the coupling means are adapted for coupling the driving shaft of the car with the ball screw (revertible), such that the driving shaft drives the ball screw (revertible). This function is particularly useful in situations, where the car is moving at low speed, e.g. with less than 50 km/h, and/or if the car is braking or stopping.

In accordance with the first embodiment the ball screw (revertible) is adapted to rotate and thereby driving the axial cam in a first axial direction, if the ball screw (revertible) is coupled to the driving shaft of the car. The axial cam is adapted for moving the piston in a radial outward direction, if the axial cam is being driven in the first axial direction and the piston is adapted for compressing the rubber spring, if the piston is moved in the radial outward direction. Thereby, kinetic energy of the driving shaft of the car is stored within the at least one compressed rubber spring.

Furthermore, the rubber spring can be adapted for decompressing (in particular, if the car is starting again, i.e. accelerating from 0 km/h), such that the piston is moved in a radial inward direction by the rubber spring, the axial cam is driven in a second axial direction by the piston, wherein the second axial direction is opposite to the first axial direction, the ball screw (revertible) is driven by the axial cam and the drive shaft of the car can be driven by the ball screw (revertible) via the coupling means. Thereby kinetic energy stored in the rubber spring can be delivered to the driving shaft of the car. If the axial cam is driven in the second axial direction, the ball screw (revertible) is driven in a turning direction which is opposite of an intended turning direction of the driving shaft. Thus, the turning direction of the ball screw (revertible) has to be transformed into the intended turning direction of the driving shaft. This is achieved by the coupling means which are adapted accordingly, e.g. by means of a planetary gear and two latches as described further below.

According to another embodiment the magnetic-electric system comprises a principle motor/generator unit, wherein the principle motor/generator unit surrounds the elastic energy storing and delivering system. The driving shaft of the car can be coupled by the coupling means in the aforementioned manner with the principle motor/generator unit for at least supporting the car driving at a medium speed (e.g. at a speed above 50 km/h and below 130 km/h) . The arrangement of the principle motor/generator unit around the elastic energy storing and delivering system saves space, thus leading to a very compact design of the device. The coupling means are adapted for coupling the driving shaft of the car with the motor/generator unit, in particular with a rotor shaft of the motor/generator unit, such that the driving shaft drives the motor/generator unit. Furthermore, the coupling means are also adapted for coupling the driving shaft of the car with the motor/generator unit, such that the motor/generator unit drives the driving shaft of the car.

Furthermore, the principle motor/generator unit can comprise a rotor, wherein the at least one rubber spring of the elastic energy storing and delivering system is arranged within the rotor of the principle motor/generator unit and wherein the at least one rubber spring is at least partly made of a ferrite powder mix. In a preferred embodiment - as already mentioned above - the elastic energy storing and delivering system comprises a first rubber spring, a second rubber spring and a third rubber spring. The principal motor/generator unit and the elastic energy storing and delivering system share the at least one rubber spring, preferably the first rubber spring, the second rubber spring and the third rubber spring. The at least one rubber spring fulfils at least a double function, namely to store and deliver kinetic energy within the elastic energy storing and delivering system as well as act as an permanent magnet within the rotor of the principal motor/generator unit. Therefore, this embodiment enables to save parts of the principal motor/generator unit and the elastic energy storing and delivering system, thus leading to low manufacturing efforts and costs.

Also, the rotor of the principle motor/generator unit can comprise at least one Neodymium bar. In a preferred embodiment the rotor comprises a first neodymium bar associated with the first rubber spring, a second neodymium bar associated with the second rubber spring and a third neodymium bar associated with the third rubber spring. The at least one neodymium bar enables a correction of a magnetic field generated by the principle motor/generator unit.

Additionally, the device can comprise a housing, a first latch and a second latch, wherein the first latch is mounted within the housing, the second latch is mounted within the rotor of the principal motor/generator unit. Furthermore, the first latch can be adapted to lock the rotor of the principal motor/generator unit by connecting the rotor of the principal motor/generator unit with the housing and the second latch can be adapted to lock the rotor of the principal motor/generator unit by connecting the rotor of the principal motor/generator unit with the coupling means. By this, the coupling means and latches can simply and effectively control different energy storing and delivering states of the device.

According to another embodiment the magnetic-electric system comprises an auxiliary motor/generator unit, wherein the auxiliary motor/generator unit surrounds the coupling means. The driving shaft of the car can be coupled by the coupling means in the aforementioned manner with the auxiliary motor/generator unit for at least supporting the car driving at a low speed (e.g. at a speed below 50 km/h) . The auxiliary motor/generator unit can be used particularly in sailing phases and coasting phases. In sailing phases a high speed of the car is maintained at very low resistance from outside boundary conditions (e.g., if the car is driving on the highway), wherein an internal combustion engine of the car has been stopped. In coasting phases a medium speed of the car is maintained at a medium resistance from outside boundary conditions (e.g., if the car is driving in a city), wherein the internal combustion engine of the car is running. The arrangement of the auxiliary motor/generator unit around the coupling means safes space and enables a very compact design of the device.

Furthermore, the auxiliary motor/generator unit can comprise a rotor, wherein the coupling means comprises a planetary gear, wherein the planetary gear comprises an annular gear and wherein the annular gear is the rotor of the auxiliary motor/generator unit. The annular gear fulfils at least a double function, namely the rotor function of the auxiliary motor/generator unit and a coupling and transducing function of the planetary gear or the coupling means, respectively. Therefore, this embodiment enables to save parts of the auxiliary motor/generator unit and the coupling means, thus leading to low manufacturing efforts and costs.

According to another embodiment the inertial energy storing and delivering system comprises a rotor, wherein the rotor of the inertial energy storing and delivering system is the rotor of the principle motor/generator unit. The rotor fulfils at least a double function, namely to be the rotor of the principle motor/generator unit and to be a flywheel of the inertial energy storing and delivering system. Therefore, this embodiment enables to save parts of the principal motor/generator unit and the inertial system, thus leading to low manufacturing efforts and costs.

According to still another embodiment the coupling means comprise a mobile armature, wherein the mobile armature and the latches can be brought into different positions depending on the speed of the car, such that different configurations of the device are achieved.

For example, the mobile armature can be brought into different positions by a magnetic field of a coil, e.g. the coil of the rotor of the principal motor/generator unit. For example, the mobile armature can be brought into three positions 0, 1 and 2. The latches and can have two positions: An "on-latch"-position, in which they are extended, and an "off-latch"-position, in which they are retracted. The first latch has the function to couple/uncouple the housing with the rotor or from the rotor, respectively. The second latch has the function to couple/uncouple the rotor with secondary coupling or from the secondary coupling, respectively.

The coupling means can have three states due to different positions of the mobile armature. In a state A related to the position 0 of the mobile armature (central position) the driving shaft is freely to be rotated. In a state B related to a position 1 of the mobile armature (extremely left position) the driving shaft and the ball screw (revertible) are coupled and have a same rotation sense or turning direction. In a State C related to a position 2 of the mobile armature (extremely right position) the driving shaft and ball screw (revertible) are coupled and have an opposite rotation sense or turning direction.

The device can have different configurations due to the different states of the coupling means and the latches. By "configurations" it is meant that at least one of the elastic energy storing and delivering system, the magnetic-electric energy storing and delivering system and the inertial energy storing and delivering system depending is coupled with the driving shaft of the car in such a way that either kinetic energy of the car can be stored by the respective coupled system or kinetic energy of the respective coupled system can be delivered to the driving shaft of the car.

Preferably, the device can act as a double clutch according to a configuration of the device. The double clutch function enables to avoid shocks in car transmission and as a result to avoid shocks in car driving. Furthermore, the double clutch function has the advantage of having fluency on power flow and allows to avoid situations in which car traction is lost, e.g. when the car is driven on a ramp and the car speed is shifted.

Such a double clutch function (which enables to avoid drive shocks) can be enabled - in particular for a START of the car - by using the elastic energy storing and delivering system and the auxiliary motor/generator unit with the following configuration: The mobile armature is in its extremely left position and the first latch is in its on-latch-position respectively the second latch is in its off-latch-position.

A further double clutch function (which enables to avoid drive shocks) can be able to be in place - in particular for driving the car at a medium speed (e.g. 50 km/h < v < 130 km/h) - using the magnetic-electric energy storing and delivering system together with the auxiliary motor/generator unit with the following configuration: The mobile armature is in its extremely left position or in its extremely right position depending on a sense movement of the car or needs of the car (due to coupling means ratio and because the rotation sense of the principle motor/generator unit can be easily managed) and the first latch is in its off-latch-position respectively the second latch is in its on-latch-position.

Another double clutch function can be able to be in place - in particular for driving the car at a high speed (e.g. v> 130 km/h) - using the magnetic-electric energy storing and delivering system and the inertial energy storing and delivering system with the following configuration: The mobile armature is in its extremely left position and the first latch is in its off-latch-position respectively the second latch is in its on-latch-position.

Furthermore a double clutch function can be able to be in place - in particular for braking the car at a high speed (e.g. v> 130 km/h) - using the magnetic-electric energy storing and delivering system and the inertial energy storing and delivering system with the following configuration: The mobile armature is in its extremely right position and the first latch is in its off-latch-position respectively the second latch is in its on-latch-position.

According to a second aspect of the present invention a car is provided, wherein the car comprises a device according to one of the foregoing claims. Regarding further effects, advantages and beneficial embodiments of the car according to the second aspect of the present invention it is referred to the above explanations regarding the device according to the first aspect of the present invention.

These and other aspects of the invention will be apparent from and elucidated with reference to the embodiments as per the drawings described hereinafter. In the following description exemplary embodiments of the invention are explained with reference to the accompanying schematic drawing in which
- Fig. 1: shows a top view of a drivetrain of a car comprising two devices for storing and delivering energy in accordance with an embodiment of the invention,
- Fig. 2: shows a scheme of one of the devices shown by Fig. 1 with basic elements of the device,
- Fig. 3: a cross-sectional view of a device as shown by Fig. 2 and
- Fig. 4: an enlarged cross-sectional view of coupling means and an auxiliary motor/generator unit of the device shown by Fig. 3.

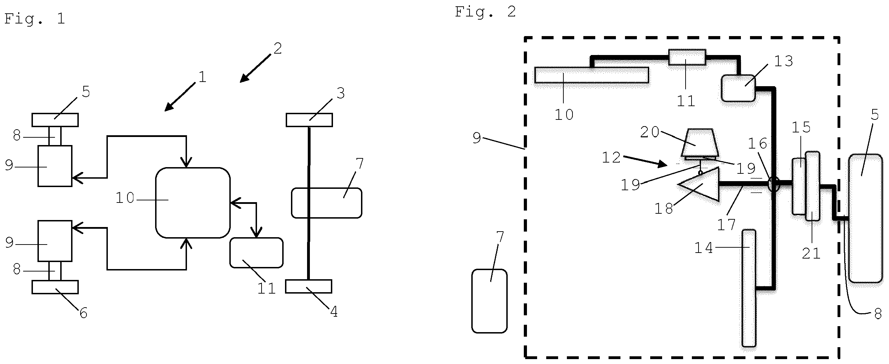

Fig. 1 shows a drivetrain 1 of car 2, wherein the car 2 is not shown in further detail. The drivetrain 1 comprises a first front wheel 3, a second front wheel 4, a first rear wheel 5 and a second rear wheel 6. The front wheels 3, 4 are driven by an internal combustion engine 7. However, the front wheels 3, 4 can additionally or alternatively be driven by an electric motor instead of the internal combustion engine 7. The rear wheels 5 and 6 each can be connected via a driving shaft 8, in the shown example a bellow shaft, to a device 9 for storing and delivering energy. The devices 9 can be electrically connected to a battery 10 (e.g. working at 12 V) which in turn can be connected to power electronics 11. The devices 9 can drive the rear wheels 5 and 6 by delivering stored energy to said wheels 5, 6, thereby transforming the 2x4 (here is 4x2 but for showing the front wheels 3, 4 are drivers is wrote 2x4) car system into a 4x4 car system. The devices 9 can also transform the car 2 into a hybrid electric vehicle or electric vehicle and can enable ABS, ESP, ASR, double clutch and co-steering functions.

Fig. 2 shows the internal combustion engine 7 as per Fig. 1, wherein the connection to the front wheels 3, 4 are omitted. However, the internal combustion engine 7 is adapted to drive the front wheels 3, 4 as it is shown by Fig. 1. If the front wheels 3, 4 are driven by the internal combustion engine 7, the car 2 can be driven at a respective direction and speed, wherein the rear wheels 5, 6 are dragged and are rotating accordingly. Fig. 2 shows the device 9, which is connected to the rear wheel 5. However, the functions of the other device 9, which is connected to the rear wheel 6, are the same.

The device 9 can comprise an elastic energy storing and delivering system 12 (in the following: "elastic system 12"), a magnetic-electric energy storing and delivering system 13 (in the following: "magnetic-electric system 13"), an inertial energy storing and delivering system 14 (in the following: "inertial system 14"), coupling means 15 and two latches 16.

The coupling means 15 can be shortly described as being invertible, reversing ordered and bidirectional. The coupling means 15 can be coupled to the driving shaft 8 or be decoupled from the driving shaft 8, respectively. The coupling function enables that the device 9 can drive the rear wheel 5 or 6, respectively, via the driving shaft 8, wherein the device 9 acts as a device for delivering kinetic energy to the driving shaft 8 and as a result to the rear wheel 5 or 6, respectively. On the other hand, the coupling function enables that the rear wheel 5 or 6, respectively, can drive the device 9 via the driving shaft 8, wherein the device 9 acts as a device for storing kinetic energy. To enable said energy storing and delivering functions, the coupling means 15 and the latches 16 can be brought into different states or positions, respectively. A specific power of the device 9 can e.g. be 1 kW/kg. The decoupling function enables that the driving shaft 8 and the device 9 are disconnected from each other and that the driving shaft 8 can rotate freely together with the wheel 5 or 6, respectively.

The elastic system 12 can comprise a ball screw (revertible) 17, an axial cam 18, at least one piston 19, preferably three pistons 19 and at least one rubber spring 20, preferably three rubber springs 20. The magnetic-electric system 13 can comprise a principal motor/generator unit and the inertial system 14 can comprise a rotor, e.g. a rotor of the principal motor/generator unit. The coupling means 15 or the magnetic-electric system 13, respectively, can comprise an auxiliary motor/generator unit 21. The coupling means 15. in particular together with the two latches 16, can control, if and how the driving shaft 8 is coupled to at least one of the elastic system 12, the magnetic-electric system 13 and the inertial system 14. Such a coupling is done depending on the speed of the car 2 or depending on the energy of the car 2, respectively.

If the car 2 is driving at a high speed (e.g. a speed above 130 km/h) the driving shaft 8 can be coupled to the inertial system 14. By this, kinetic energy of the rear wheel 5 or 6, respectively, can be stored via the driving shaft 8 and the coupling means 15 within the inertial system 14. Such a storing can be in phase of the car deceleration, wherein kinetic energy of the car 2 is transferred particularly to a rotational movement of the rotor of the inertial system 14. The stored energy can flow back to the rear wheel 5 or 6, respectively, particularly for an acceleration of the car 2. Such a delivery of energy from the inertial system 14 of the device 9 to the driving wheel 5 or 6, respectively can be done via the coupling means 15 and the driving shaft 8, wherein the coupling means 15 and the latches 16 can control a respective connection between the involved elements of the device 9.

If the car 2 is driving at a medium speed (e.g. a speed above 50 km/h and below 130 km/h) the driving shaft 8 can be coupled to the magnetic-electric system 13. By this, kinetic energy of the rear wheel 5 or 6, respectively, can be stored via the driving shaft 8 and the coupling means 15 within the magnetic-electric system 13. Such a storing can be in phase of the car deceleration, wherein kinetic energy of the car is transferred particularly to a rotational movement of at least one of the rotors of the magnetic-electric system 13. The stored energy can flow back to the rear wheel 5 or 6, respectively, particularly for an acceleration of the car 2. Such a delivery of energy from the magnetic-electric system 13 of the device 9 to the driving wheel 5 or 6, respectively can be done via the coupling means 15 and the driving shaft 8, wherein the coupling means 15 and the latches 16 can control a respective connection between the involved elements of the device 9.

If the car 2 is driving at a low speed (e.g. a speed below 50 km/h) the driving shaft 8 can be coupled to the elastic system 12. By this, kinetic energy of the rear wheel 5 or 6, respectively, can be stored via the driving shaft 8 and the coupling means 15 within the at least one rubber spring 20 of the elastic system 13. Such a storing can be in phase of the car deceleration until the car 2 has stopped, wherein kinetic energy of the car 2 is transferred from the rear wheel 5 or 6, respectively, to the at least one rubber spring 20 of the elastic system 12 via the driving wheel 8, the coupling means 15, the ball screw (revertible) 17, the axial cam 18 and the at least one piston 19. This storing of kinetic energy can at least support a braking function of the car 2. The stored energy can flow back to the rear wheel 5 or 6, respectively, particularly for at least supporting an acceleration of the car 2 when the car 2 is starting again after stopping. Such a delivery of energy from the elastic system 12 of the device 9 to the driving wheel 5 or 6, respectively, can be done via the coupling means 15 and the driving shaft 8, wherein the coupling means 15 and the latches 16 can control a respective connection between the involved elements of the device 9.

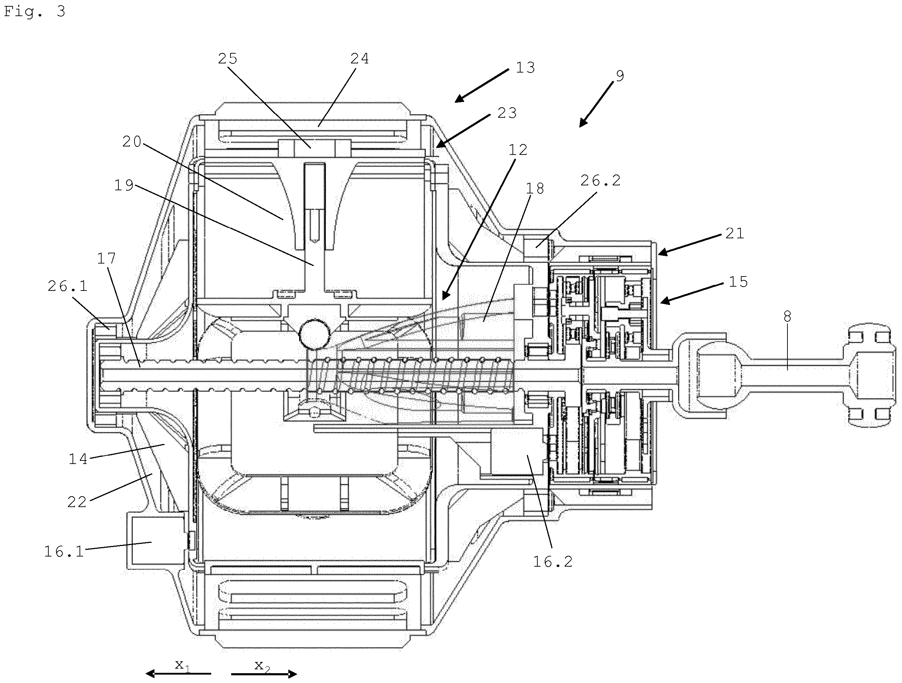

Fig. 3 shows how a device 9 as per Fig. 2 can be configured in further detail. The device 9 can comprise a housing 22 in which particularly the elastic system 12, the magnetic-electric system 13, the inertial system 14, the coupling means 15 and the latches 16.1 and 16.2 are arranged.

The magnetic-electric system 13 comprises a principal motor/generator 23 with a stator 24, in the shown example with 24 coils, wherein the stator 24 surrounds the elastic system 12. The principal motor/generator 23 further comprises a rotor 14. The rotor 14 is configured hollow, builds a part of the inertial system 14 and accommodates the three pistons 19 as well as the three rubber springs 20 of the elastic system 12. The three rubber springs 20 are at least partly made of a ferrite powder mix and fulfil the function of a permanent magnet of the principal motor/generator unit 23. On the outside of the rotor 14 3 neodymium bars 25 are arranged for magnetic field correction.

The rotor 14 is rotatably mounted in bearings 26.1 and 26.2 within the housing 22 and can be blocked by the first latch 16.1 (shown left in Fig. 3) which is mounted movably in axial direction within the housing 22. The second latch 16.2 (shown right in Fig. 3) is mounted movably in axial direction within the hollow rotor 14. The second latch 16.2 can block the rotor 14 with a secondary coupling 27 of the coupling means 15.

To store kinetic energy of the driving car 2 within the elastic system 12 of the device 9, the coupling means 15 couple the driving shaft 8 of the car 2 with the ball screw (revertible) 17, such that the driving shaft 8 drives the ball screw (revertible) 17, wherein the first latch 16.1 does not lock the rotor 14. The rotating ball screw (revertible) 17 drives the axial cam 18 in a first axial direction x₁ (to the left as per Fig. 3). The axial cam 18 moves the three pistons 19 in a radial outward direction, such that the three rubber springs 20 are compressed, thereby storing energy within the three rubber springs 20.

To deliver kinetic energy stored within the elastic system 12 of the device 9 to the rear wheels 5 and/or 6 via the driving shaft 8 of the car 2, the three pistons 19 are moved in a radial inward direction by the decompressing three rubber springs 20, the axial cam 18 is driven in a second axial direction x₂ (to the right as per Fig. 3) by the three pistons 19, the ball screw (revertible) 17 is driven by the axial cam 18 and the drive shaft 8 of the car 2 is driven by the ball screw (revertible) 17 via the coupling means 15.

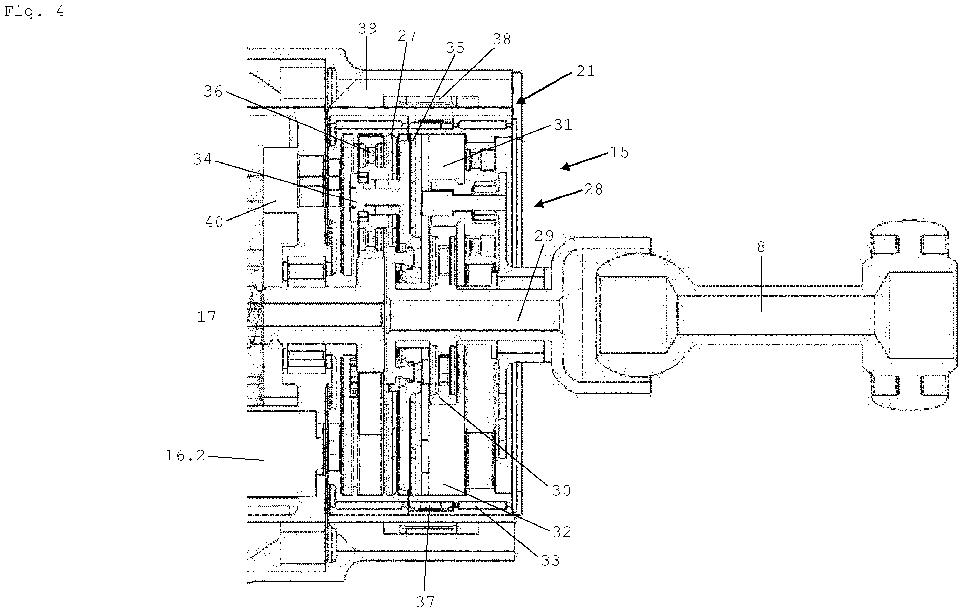

Fig. 4 particularly shows the coupling means 15 and the auxiliary motor/generator unit 21. The coupling means 15 comprise a planetary gear 28, which comprises a shaft 29 a solar gear 30, three satellite gears 31 and an annular gear 32. The annular gear 32 (which is mounted into a principal coupling 35) is rotatably mounted with a bearing 33 and also fulfils the function of a rotor of the auxiliary motor/generator unit 21.

The shaft 29 can be coupled, firstly, via a mobile armature 34 (in its extremely right position) and, in this way, the principal coupling 35 can be coupled with three gear wheels 36 of the coupling means 15. The three gear wheels 36 are in connection with the ball screw (revertible) 17 and can be coupled via the secondary coupling 27. The shaft 29 can be coupled, secondarily, via the mobile armature 34 (in its extremely left position) with the secondary coupling 27.

Neodymium or ferrite bars 37 can be arranged on the outside of the annular gear/auxiliary rotor 32 and coils 38 are arranged on the inside of an auxiliary stator 39 of the auxiliary motor/generator unit 21. The auxiliary stator 39 surrounds the coupling means 15.

The coupling means 15 can be brought into three different states or positions, respectively. In a first state, the driving shaft 8 can rotate freely. In a second state, the driving shaft 8 and the ball screw (revertible) 17 are coupled and have the same turning direction. And a third state, the driving shaft 8 and the ball screw (revertible) 17 are coupled and have opposite turning directions. The coupling means 15 fulfil the function of coupling and uncoupling the driving shaft 8 with the ball screw (revertible) 17. Furthermore, the coupling means 15 introduce a transmission ratio via the planetary gear 28. A shifting between the three states is done by the mobile armature 34 with a magnetic field of a coil 40 from the rotor 14, which attracts or pushes away the mobile armature 34, respectively. The principal coupling 35 is mounted on the auxiliary motor/generator unit 21 for driving with it in phases of sailing and coasting in order to save fuel of the car 2. Furthermore the auxiliary motor/generator unit 21 can start the internal combustion engine 7 of the car 2.

The coupling means 15 can have three states due to different positions of the mobile armature 34. In a state A related to a position 0 of the mobile armature 34 (central position) the driving shaft 8 is freely to be rotated. In a state B related to a position 1 of the mobile armature 34 (extremely left position) - the driving shaft 8 and the ball screw (revertible) 17 are coupled and have a same rotation sense or turning direction. In a State C related to a position 2 of the mobile armature 34 (extremely right position) the driving shaft 8 and ball screw (revertible) 17 are coupled and have an opposite rotation sense or turning direction.

The latches 16.1 and 16.2 have two positions: An "on-latch"-position, in which they are extended, and an "off-latch"-position, in which they are retracted. The latch 16.1 has the function to couple/uncouple the housing 22 with the rotor 14 or from the rotor, respectively. The latch 16.2 has the function to couple/uncouple the rotor 14 with secondary coupling 27 or from the secondary coupling 27, respectively.

The coupling means 15 fulfil the function to couple / uncouple the driving shaft 8 with the ball screw (revertible) 17 or from the ball screw (revertible) 17, respectively, and to introduce a transmission ratio due to its compound planetary gear reducer in state C. The shifting between the states A, B and C is done by the mobile armature 34 with the magnetic field of the coil 40, which attracts or relicts the mobile armature 34.

Due to different positions of the mobile armature 34 and the latches 16.1 and 16.2 a requested configuration for the energy storing and delivering device (9) is enabled. The gears of the coupling means 15 are turning as follows: The solar gear 30, three satellite gears 31 and an annular gear 32 are turning in all states A, B, C of the coupling means 15. The three gear wheels 36 are in connection with the ball screw (revertible) 17 and they are turning just in the states B and C of the coupling means 15 and they are locked in the state A of the coupling means 15.

For a low speed (e.g. v <50 km/h) the car 2 can brake (till STOP) using the elastic energy storing and delivering system 12 with the following configuration: The mobile armature 34 is in its extremely right position and the latch 16.1 is in its on-latch-position respectively the latch 16.2 is in its off-latch-position.

ABS / ESP functions can be able to be in place using the elastic energy storing and delivering system 12 and the auxiliary motor/generator unit 21 with the following configuration: The mobile armature 34 is in its extremely right position and the latch 16.1 is in its on-latch-position respectively the latch 16.2 is in its off-latch-position.

For a STOP the car 2 can use the elastic energy storing and delivering system 12 with the following configuration: The mobile armature 34 is in its extremely right position and the latch 16.1 is in its on-latch-position respectively the latch 16.2 is in its on-latch-position.

For a START the car 2 can be driven using the elastic energy storing and delivering system 12 with the following configuration: The mobile armature 34 is in its extremely left position and the latch 16.1 is in its on-latch-position respectively the latch 16.2 is in its off-latch-position.

ASR / Double clutch functions (which enable to avoid drive shocks) can be able to be in place using the elastic energy storing and delivering system 12 and the auxiliary motor/generator unit 21 with the following configuration: The mobile armature 34 is in its extremely left position and the latch 16.1 is in its on-latch-position respectively the latch 16.2 is in its off-latch-position.

For a medium speed (e.g. 50 km/h < v <130 km/h) the car 2 can drive/brake with the magnetic-electric energy storing and delivering system (13) with the following configuration: The mobile armature 34 is its extremely left position or in its extremely right position depending on a sense movement of the car 2 or needs of the car 2 (due to coupling means 15 ratio and because the rotation sense of the principle motor/generator unit 23 can be easily managed) and the latch 16.1 is in its off-latch-position respectively the latch 16.2 is in its on-latch-position.

A Double clutch function (which enables to avoid drive shocks) can be able to be in place using the magnetic-electric energy storing and delivering system 13 with its auxiliary motor/generator unit 21 with the following configuration: The mobile armature 34 is in its extremely left position or in its extremely right position depending on a sense movement of the car 2 or needs of the car 2 (due to coupling means 15 ratio and because the rotation sense of the principle motor/generator unit 23 can be easily managed) and the latch 16.1 is in its off-latch-position respectively the latch 16.2 is in its on-latch-position.

For a high speed (e.g. v > 130 km/h) the car 2 can be driven with the inertial energy storing and delivering system 14 with the following configuration: The mobile armature 34 is in its extremely left position and the latch 16.1 is in its off-latch-position respectively the latch 16.2 is in its on-latch-position.

A double clutch function can be able to be in place using the magnetic-electric energy storing and delivering system 13 and the inertial energy storing and delivering system 14 with the following configuration: The mobile armature 34 is in its extremely left position and the latch 16.1 is in its off-latch-position respectively the latch 16.2 is in its on-latch-position.

For a high speed (e.g. v > 130 km/h) the car 2 can brake with the inertial energy storing and delivering system 14 with the following configuration: The mobile armature 34 is its extremely right position and the latch 16.1 is in its off-latch-position respectively the latch 16.2 is in its on-latch-position.

A Double clutch function can be able to be in place using the magnetic-electric energy storing and delivering system 13 and the inertial energy storing and delivering system 14 with the following configuration: The mobile armature 34 is in its extremely right position and the latch 16.1 is in its off-latch-position respectively the latch 16.2 is in its on-latch-position.

## Claims

1. Energy storing and delivering device (9) for a car (2), the device (9) comprising:
- an elastic energy storing and delivering system (12),
- a magnetic-electric energy storing and delivering system (13),
- an inertial energy storing and delivering system (14) and
- coupling means (15),
wherein the coupling means (15) are adapted for coupling a driving shaft (8) of the car (2) with at least one of the elastic energy storing and delivering system (12), the magnetic-electric energy storing and delivering system (13) and the inertial energy storing and delivering system (14) depending on a speed of the car (2) in such a way that
- kinetic energy of the car (2) can be stored by the respective coupled system (12, 13 and/or 14) and
- kinetic energy of the respective coupled system (12, 13 and/or 14) can be delivered to the driving shaft (8) of the car (2).

2. The device (9) according to claim 1, wherein the elastic energy storing and delivering system (12) comprises a ball screw (17), an axial cam (18), at least one piston (19) and at least one rubber spring (20), wherein
- the coupling means (15) are adapted for coupling the driving shaft (8) of the car (2) with the ball screw (17), such that the driving shaft (8) drives the ball screw (17),
- the ball screw (17) is adapted to rotate and thereby driving the axial cam (18) in a first axial direction, if the ball screw (17) is coupled to the driving shaft (8) of the car (2),
- the axial cam (18) is adapted for moving the piston (19) in a radial outward direction, if the axial cam (17) is being driven in the first axial direction,
- the piston (19) is adapted for compressing the rubber spring (20), if the piston (19) is moved in the radial outward direction.

3. The device (9) according to claim 2, wherein the rubber spring (20) is adapted for decompressing, such that
- the piston (19) is moved in a radial inward direction by the rubber spring (20),
- the axial cam (18) is driven in a second axial direction by the piston (19), wherein the second axial direction is opposite to the first axial direction,
- the ball screw (17) is driven by the axial cam (18) and
- the drive shaft (8) of the car (2) can be driven by the ball screw (17) via the coupling means (15).

4. The device (9) according to one of the foregoing claims, wherein the magnetic-electric system (13) comprises a principle motor/generator unit (23), wherein the principle motor/generator unit (23) surrounds the elastic energy storing and delivering system (12).

5. The device (9) according to claim 4, wherein the principle motor/generator unit (23) comprises a rotor (14), wherein the at least one rubber spring (20) of the elastic energy storing and delivering system (12) is arranged within the rotor (14) of the principle motor/generator unit (23) and wherein the at least one rubber spring (20) is at least partly made of a ferrite powder mix.

6. The device (9) according to claim 5, wherein the rotor of the principle motor/generator unit (23) comprises at least one neodymium bar (25).

7. The device (9) according to one of the claims 4 to 6, wherein the device (9) comprises a housing (22), a first latch (16.1) and a second latch (16.2), wherein
- the first latch (16.1) is mounted within the housing (22),
- the second latch (16.2) is mounted within the rotor (14) of the principal motor/generator unit (23),
- the first latch (16.1) is adapted to lock the rotor (14) of the principal motor/generator unit (23) by connecting the rotor (14) of the principal motor/generator unit (23) with the housing (22) and
- the second latch (16.2) is adapted to lock the rotor (14) of the principal motor/generator unit (23) by connecting the rotor (24) of the principal motor/generator unit (23) with the coupling means (15).

8. The device (9) according to one of the foregoing claims, wherein the magnetic-electric system (13) comprises an auxiliary motor/generator unit (21), and wherein the auxiliary motor/generator unit (21) surrounds the coupling means (15).

9. The device (9) according to claim 8, wherein the auxiliary motor/generator unit (21) comprises a rotor (32), wherein the coupling means (15) comprise a planetary gear (28), wherein the planetary gear (28) comprises an annular gear (32) and wherein the annular gear (32) is the rotor (32) of the auxiliary motor/generator unit (21).

10. The device (9) according to one of the foregoing claims, wherein the inertial energy storing and delivering system (14) comprises a rotor (14), wherein the rotor (14) of the inertial energy storing and delivering system (14) is the rotor (14) of the principle motor/generator (23).

11. The device (9) according to one of the foregoing claims, wherein the coupling means (15) comprise a mobile armature (34), wherein the mobile armature (34) and the latches (16.1, 16.2) can be brought into different positions depending on the speed of the car (2), such that different configurations of the device (9) are achieved.

12. The device (9) according to claim 11, wherein the device (9) can act as a double clutch according to a configuration of the device (9).

13. A car (2) comprising a device (9) according to one of the foregoing claims.
